# EUROPÄISCHE PATENTSCHRIFT

(11) **EP 2 263 967 B1**
(45) Veröffentlichungstag und Bekanntmachung des Hinweises auf die Patenterteilung: **28.12.2011**
(21) Anmeldenummer: 10006333.8
(22) Anmeldetag: 18.06.2010
(51) Int. Cl.: B67D 7/28, B67D 7/36, B60P 3/22, B65D 90/22

(54) **Vorrichtung zur Überwachung eines Betankungsvorganges mit verbesserter Restentleerung**
Device for monitoring a tanking process with improved residue emptying
Dispositif de surveillance d'un processus de ravitaillement doté d'un vidage des résidus amélioré

(30) Priorität: 18.06.2009 DE 102009029827
(43) Veröffentlichungstag der Anmeldung: 22.12.2010
(73) Patentinhaber: Köhler, Tanja, 56566 Neuwied (DE)
(72) Erfinder: Müller, Philip, 53819 Neunkirchen (DE); Müller, Gerhard, 53819 Neunkirchen (DE)
(74) Vertreter: Cohausz Hannig Borkowski Wißgott

(56) Entgegenhaltungen:
- DE-A1- 3 632 881
- DE-B4-102005 041 437

## Beschreibung

Die vorliegende Erfindung betrifft eine Vorrichtung zur Überwachung eines Betankungsvorgangs eines Tanks mit einem Medium, mit einem Einlass und einer Einlassöffnung, einem Auslass und einem dazwischen angeordneten Befüllungsventil mit einem Schließkolben, der im geschlossenen Zustand des Befüllungsventils durch die Kraft einer ersten Druckfeder gegen einen ersten Anschlag gedrückt ist und den Einlass dichtend verschließt, und der sich bei Beaufschlagung der Vorrichtung mit einem Medium eines Drucks oberhalb einer vorbestimmten Druckgrenze unter Ausbildung eines Strömungsspaltes von dem ersten Anschlag abhebt.

Eine derartige Vorrichtung ist beispielsweise aus der DE 10 2005 041 437 B4 bekannt. Sie kann in den Betankungsweg zwischen einem Tankfahrzeug und einem Tank oder einer Tankanlage eingebracht werden und wird von dem in den Tank zu füllenden flüssigen Medium, wie beispielsweise Heizöl oder Dieselkraftstoff durchflossen. Eine derartige Vorrichtung überwacht den Betankungsvorgang und schließt den Betankungsweg, sobald der Versuch unternommen wird, Luft in den Tank zu füllen. Betrugsversuche, bei denen anstelle des einzufüllenden Mediums Luft in den Tank gefördert wird, können dadurch erkannt und wirkungsvoll verhindert werden.

Die aus der DE 10 2005 041 437 B4 bekannte Überwachungsvorrichtung weist ein Befüllungsventil mit einem Dichtkolben auf, der aufgrund einer unter Vorspannung gesetzten Druckfeder in Richtung des Einlasses drückt und diesen dichtend verschließt. Der Druckkolben ist über eine Kolbenstange mit einem Hauptkolben verbunden, der in einem mit einem flüssigen Dämpfungsmedium gefüllten Arbeitszylinder beweglich einliegt, so dass die Rückstellbewegung des Dichtkolbens beim Schließvorgang des Befüllungsventils verzögert erfolgt.

Bei der Betankung von Tanks oder Tankanlagen werden Volumenströme zwischen 150 Liter pro Minute bis 800 Liter pro Minute verwendet. Bei einer Befüllung mit 800 Litern pro Minute öffnet das Befüllungsventil mit seinem vollen Hub so dass für den Schließvorgang dieser volle Hub zur Verfügung steht. Dieser kann beispielsweise 12mm betragen. Wird dagegen mit lediglich 150 Liter pro Minute befüllt, öffnet das Befüllungsventil dagegen nur mit einem Viertel bis einem Drittel des Maximalhubs, so dass das Befüllungsventil für den Schließvorgang weniger als ein Drittel der Zeit gegenüber der vollständigen Öffnung benötigt. Verzögert der Dichtkolben die Schließbewegung mit einer Schließgeschwindigkeit von 1 mm pro Sekunde, ergibt sich folgemäßig, dass das Befüllungsventil nach 3-4 Sekunden geschlossen ist. Unter diesen Bedingungen ist eine Restentleerung des Vorrichtungsgehäuses nicht unter allen Umständen gewährleistet, so dass es im schlimmsten Fall zu Ölschäden durch Auslaufen des Öl beim entfernen des Betankungsschlauchs von der Vorrichtung kommen kann.

Diese Gefahr ist insbesondere bei Batterietankanlagen gegeben, die aus einer Reihen-, Block- oder Winkelaufstellung von Tanks bestehen, beispielsweise mit einem jeweiligen Volumeninhalt von 1000 Liter, welche über oberseitig verlaufende gemeinsame Füllleitungen miteinander verbunden sind. Damit sich die einzelnen Behälter gleichmäßig befüllen, weist die Füllleitung zu jedem Tank eine Fülldüse auf, auch Staudüse genannt, deren Innendurchmesser zwischen 6 mm und 12 mm beträgt. Dies gewährleistet, dass die Tanks, von denen bis zu 25 nebeneinander angeordnet sein können, gleichmäßig befüllt werden. Für den Befüllungsvorgang der Behälter ist in der Füllleitung ein vergleichsweise hoher Staudruck aufzubauen. Entsprechend entleert sich das Restmedium aus der Vorrichtung nur langsam, so dass die volle Verzögerung des Dichtkolbens notwendig ist, um die Restentleerung der Vorrichtung für diesen Anwendungsfall zu gewährleisten.

Die vorliegende Erfindung stellt sich daher die Aufgabe, eine Vorrichtung zur Überwachung eines Betankungsvorgangs derart zu verbessern, dass unabhängig von der Durchflussmenge stets einen ausreichenden Hubweg bei der Schließbewegung des Befüllungsventils zur Verfügung steht, so dass eine Restentleerung immer zuverlässig gewährleistet ist.

Diese Aufgabe wird durch die Merkmale des Anspruchs 1 gelöst. Vorteilhafte Weiterbildungen der Erfindung sind in den Unteransprüchen formuliert.

Erfindungsgemäß wird eine Vorrichtung zur Überwachung eines Betankungsvorganges eines Tanks mit einem Medium vorgeschlagen, mit einem Einlass, einer Einlassöffnung, einem Auslass und einem dazwischen angeordneten Befüllungsventil mit einem Schließkolben, der im geschlossenen Zustand des Befüllungsventils durch die Kraft einer ersten Druckfeder gegen einen ersten Anschlag gedrückt ist und den Einlass dichtend verschließt, und der sich bei Beaufschlagung der Vorrichtung mit einem Medium eines Drucks oberhalb einer bestimmten Druckgrenze unter Ausbildung eines Strömungsspaltes von einem ersten Anschlag abhebt, wobei in dem Einlass ein Einsatz mit einem rohrförmigen Abschnitt beweglich angeordnet ist, der Einsatz im unbeaufschlagtem Zustand durch die Kraft einer zweiten Druckfeder gegen einen zweiten Anschlag gedrückt ist, und der Einsatz eine Anströmfläche für das einzufüllende Medium aufweist, mittels welcher der Einsatz beim Einfüllen des Mediums zum Schließkolben derart bewegbar ist, dass der Strömungsspalt zumindest kurzzeitig verringerbar ist.

Grundidee der vorliegenden Erfindung ist, einen verschieblichen Einsatz in dem Einlass der Überwachungsvorrichtung vorzusehen, der durch das strömende Medium in Richtung des Schließkolbens bewegt wird, so dass der durch das Abheben des Schließkolbens von seinem Dichtsitz erzeugte ringförmige Spalt, durch den das einzufüllende Medium strömt, wieder verringert wird und das Befüllungsventil unter dem Mediumdruck weiter geöffnet wird. Der Einsatz wird dabei vom strömenden Medium kontinuierlich nachgeführt bzw. nachgedrückt, bis das Befüllungsventil mit seinem maximalen Hub geöffnet ist. Damit der Einsatz vom strömenden Medium bewegt wird, weist dieser eine Anströmfläche auf, die dem Medium einen Strömungswiderstand entgegensetzt. Die Kraft einer Druckfeder drückt den Einsatz bei fehlender Strömung in Richtung der Einlassöffnung. Dies bewirkt, dass bei Beendigung oder Unterbrechung des Betankungsvorgangs der Einsatz in seine Ausgangsposition zurückkehrt und für die Schließbewegung des Befüllungsventils der maximal zur Verfügung stehende Hub ausnutzbar ist.

Erfindungsgemäß kann die zweite Druckfeder eine geringere Federkonstante als die erste Druckfeder aufweisen. Insbesondere kann die Federkonstante der zweiten Druckfeder zwischen 5 und 10 % der Federkonstante der ersten Druckfeder aufweisen. Dies gewährleistet, dass der Einsatz bereits bei geringen Durchflussmengen zuverlässig bewegt wird.

Erfindungsgemäß kann der Einsatz von einem ringförmigen, nach Innen, d.h. in den Einlass gerichteten Vorsprung axial geführt sein. Damit ist gewährleistet, dass der Einsatz während seiner Bewegung nicht verkantet und stabil in dem Einlass einliegt.

Vorzugsweise kann der Einsatz mit einem axialen Ende an dem Schließkolben im geschlossenen Zustand des Befüllungsventils anliegen. Dies gewährleistet, dass der gesamte Bewegungshub des Einsatzes für die Hubverlängerung des Schließkolbens zur Verfügung steht.

Vorzugsweise kann das axiale Ende des Einsatzes den ersten Anschlag bilden. Dies bedeutet, dass sich der Schließkolben im geschlossenen Zustand des Befüllungsventils gegen den Einsatz abstützt. Das axiale Ende des Einsatzes stellt damit eine Dichtfläche zur Verfügung, über die der Schließkolben den Einlass dichtend verschließen kann.

Alternativ kann der Vorsprung den ersten Anschlag bilden und auf diese Weise den Hub des Schließkolbens in Richtung des Einlasses begrenzen. Der Vorsprung bildet dann an seiner zum Schließkolben gerichteten Oberfläche eine Dichtfläche bereit, an die der Schließkolben dichtend anlegbar ist.

Erfindungsgemäß kann die Anströmfläche von einer zur Einlassöffnung gerichteten Oberfläche einer Hubscheibe gebildet sein. Der Einsatz umfasst in dieser erfindungsgemäßen Ausbildung folglich eine Hubscheibe, dessen zur Einlassöffnung gerichtete Oberfläche die Anströmfläche ist. Die Hubscheibe kann durch einen ringförmigen, radial nach außen gerichteten Kragen des Einsatzes gebildet sein. Diese konstruktive Ausgestaltung des Einsatzes ermöglicht, dass der Einsatz dem einströmenden Medium einen ausreichenden Strömungswiderstand entgegenbringt, so dass das Medium den Einsatz bewegen kann. Weiterhin wird durch die der Anströmfläche abgewandte Seite des Kragens eine Fläche zur Verfügung gestellt, an die die zweite Druckfeder anlegbar ist. Dadurch, dass der Kragen radial nach außen gerichtet ist, wird der effektive Strömungsquerschnitt des Einlasses nicht verengt.

Vorzugsweise kann die Hubscheibe einstückig mit dem rohrförmigen Abschnitt des Einsatzes ausgebildet sein. In dieser Ausführung kann der Einsatz einfach und kostengünstig hergestellt werden.

In einer vorteilhaften Weiterbildung kann in axialer Richtung vor der Anströmfläche eine Lochscheibe angeordnet sein. Dies bewirkt, dass die Anströmfläche zumindest teilweise abgedeckt und damit geschützt wird.

Zur Gewährleistung, dass die Anströmfläche bei Beaufschlagung des Befüllungsventils mit einem einzufüllenden Medium angeströmt wird, kann die Lochscheibe entsprechende Ausnehmungen aufweisen, die auf die Anströmfläche gerichtet sind. Über die Abmessungen der Ausnehmungen kann die Größe der angeströmten Fläche entsprechend beeinflusst werden.

Vorzugsweise kann die Lochscheibe den zweiten Anschlag bilden, d.h. dass sich der Einsatz im unbeaufschlagten Zustand des Befüllungsventils an der Lochscheibe unterseitig anliegt. Der Anschlag kann jedoch auch durch andere geeignete Mittel gebildet sein, beispielsweise durch einen Sägering, der in dem Einlass einliegt.

Weitere Merkmale und Vorteile der Erfindung werden anhand eines bevorzugten Ausführungsbeispiels unter Bezugnahme auf die beigefügten Figuren näher erläutert.

Es zeigen:
- Figur 1A:: Vorrichtung im unbeaufschlagtem Zustand.
- Figur 1B:: Ansicht der Vorrichtung in Richtung des Einlasses entlang der Schnittlinie A-A gemäß Figur 1a
- Figur 2:: Vorrichtung mit geringfügig geöffnetem Befüllungsventil unmittelbar nach Beaufschlagung mit einem einzufüllenden Medium
- Figur 3:: Vorrichtung mit vollständig geöffnetem Befüllungsventil während des Befüllungsvorgangs
- Figur 4:: Darstellung des Zustandes von Befüllungsventil und Einsatz unmittelbar nach Beendigung oder Unterbrechung des Befüllungsvorgangs

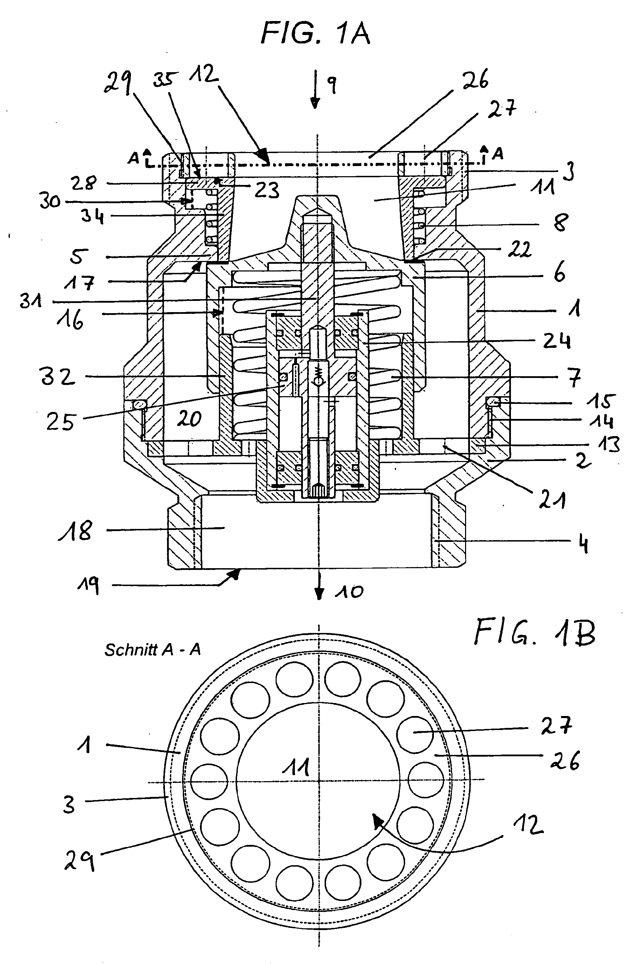

Figuren 1A und 1B zeigen eine vorteilhafte Ausführungsvariante der erfindungsgemäßen Vorrichtung zur Überwachung eines Betankungsvorganges. Die Vorrichtung umfasst ein oberes Gehäuseteil 1 und ein unteres Gehäuseteil 2 die über ein Gewinde 14 miteinander verschraubt sind. Zwischen dem oberen Gehäuseteil 1 und dem unteren Gehäuseteil 2 ist eine ringförmige Dichtung oder eine Dichtungsmasse 15 eingebracht. Die Vorrichtung weist einen Einlass 11 mit einer entsprechenden Einlassöffnung 12 auf, durch die in Durchströmrichtung 9 eine Flüssigkeit wie Diesel oder Heizöl einströmen kann. Die Vorrichtung umfasst weiterhin einen Auslass 18 mit einer entsprechenden Austrittsöffnung 19, aus der das einzufüllende Medium in Durchströmrichtung 10 aus der Vorrichtung austritt. Zwischen dem Einlass 11 und dem Auslass 18 ist ein Befüllungsventil angeordnet, welches einen Dichtkolben 6 umfasst, der sich im geschlossenen Zustand des Befüllungsventils gegen einen Vorsprung 5 abstützt. Der Vorsprung 5 ist einstückig mit dem oberen Gehäuseteil 1 ausgebildet und erstreckt sich ringförmig radial nach innen in den Einlass 11 hinein. Zwischen dem Schließkolben 6 und dem Vorsprung 5 ist ein Dichtring 22 zur Abdichtung des Einlasses angeordnet.

Der Schließkolben 6 umgreift mit einem rohrförmigen Abschnitt ein zylinderförmiges Führungselement 32, welches den Schließkolben 6 führt. Der Schließkolben 6 ist über eine Kolbenstange 31 mit einem Arbeitskolben 25 verbunden, der in einem mit einem Dämpfungsmedium gefüllten Arbeitszylinder 24 in axialer Richtung beweglich angeordnet ist. Der Arbeitszylinder 24 bildet einen hydraulischen Dämpfungszylinder und sorgt dafür, dass Bewegungen des Schließkolbens 6 nur gedämpft, d.h. verzögert ausgeführt werden. Der Schließkolben 6 kann daher auch als Verzögerungskolben bezeichnet werden. Eine Druckfeder 7, in der der Arbeitszylinder 24 einliegt, drückt den Schließkolben 6 in Richtung des Einlasses 11, d.h. mit dem Dichtring 22 gegen die dem Kolben zu gerichtete Fläche des Vorsprungs 5. Der hydraulische Dämpfungszylinder 24 und die Druckkraft der Feder 7 sind dabei vorzugsweise derart ausgelegt, dass der Schließkolben 7 eine Bewegungsgeschwindigkeit von 1 mm pro Sekunde aufweist.

Zwischen dem oberen Gehäuseteil 1 und dem unteren Gehäuseteil 2 ist eine Halteplatte 13 eingelegt und wird durch die Verschraubung der beiden Gehäuseteile gegeneinander gehalten. Die Halteplatte 13 weist Durchflussbohrungen 21 auf, durch welche in den Gehäuseinnenraum 20 gelangte Flüssigkeit zu dem Auslass 18 fließen kann. Die Druckfeder 7 stützt sich gegen einen zentralen Teil dieser Halteplatte 13 ab. Das zylinderförmige Führungselement 32 ist einstückig mit der Halteplatte 13 ausgebildet.

In dem Einlass 11 ist ein Einsatz mit einem rohrförmigen Abschnitt 34 und einer Hubscheibe 28 in axialer Richtung beweglich angeordnet. Der Einsatz wird im unbeaufschlagten Zustand durch die Kraft einer zweiten Druckfeder 8 in Richtung der Einlassöffnung 12 gegen einen Anschlag 23 gedrückt. Der Anschlag 23 ist durch die zum Schließkolben 6 gerichtete Unterseite einer Lochscheibe 26 gebildet, die über ein Gewinde 29 in den Einlass 11 der Vorrichtung eingeschraubt ist. Die Lochscheibe 26 weist eine Vielzahl in Umfangsrichtung symmetrisch angeordneter Durchflussbohrungen 27 auf, durch welche die Hubscheibe 28 angeströmt werden kann, siehe Fig. 1B. Entsprechend bildet die Oberfläche, mit der die Hubscheibe 28 an der Lochscheibe 26 anliegt, eine grundsätzlich ringförmige Anströmfläche, welche bei den dynamischen Strömungsverhältnissen beim Einfüllen des Mediums von diesem angeströmt und mit einer Kraft beaufschlagt wird.

Die Hubscheibe 28 bildet einen ringförmigen, radial nach außen gerichteten Kragen des Einsatzes, der sich an dem den Schließkolben 6 gegenüberliegenden Ende des Einsatzes einstückig an den rohrförmigen Abschnitt 34 anschließt. Die Hubscheibe 28 steht dementsprechend im Wesentlichen rechtwinklig zum rohrförmigen Abschnitt und bringt einem strömenden Medium einen maximalen Strömungswiderstand entgegen.

Das andere axiale Ende des Einsatzes liegt an dem Schließkolben 6 dichtend an. Dieses Ende wird ferner von dem Vorsprung 5 in axialer Richtung geführt. Die zweite Druckfeder 8 stützt sich an dem Vorsprung 5 ab und drückt die Hubscheibe 28 an die Lochscheibe 26.

Das obere Gehäuseteil weist ein Außengewinde 3 auf, auf welches ein Betankungsschlauch aufgeschraubt werden kann. Ferner weist das untere Gehäuseteil 2 im Auslass 18 ein Innengewinde 4 auf, mittels welchem die erfindungsgemäße Vorrichtung auf einen Tankeinfüllstutzen eines Tanks oder einer Tankanlage aufgeschraubt werden kann.

Der Hubweg des Einsatzes 28, 34 ist in Figur 1A mit Bezugsziffer 30 gekennzeichnet. Der Hubweg des Schließkolbens 6 ist mit Bezugsziffer 16 gekennzeichnet.

Figur 1B zeigt die erfindungsgemäße Vorrichtung von oben, d.h. in Strömungsrichtung mit Blick auf die Lochscheibe 26, die die Einlassöffnung 12 definiert.

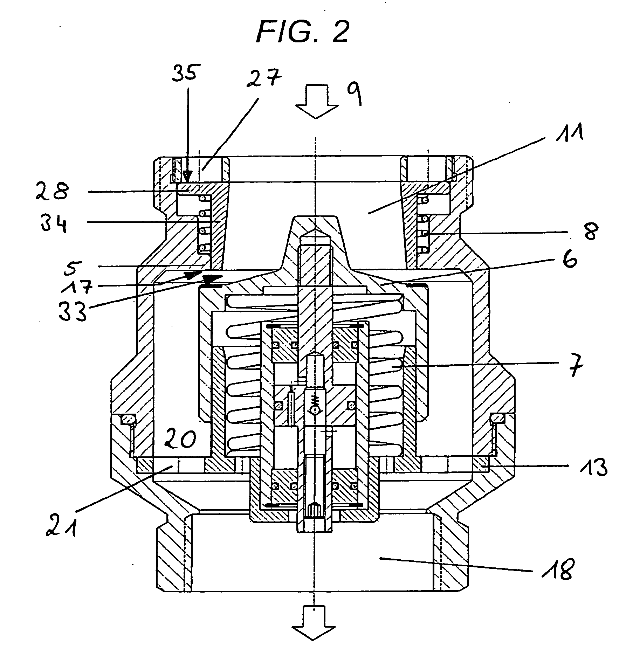

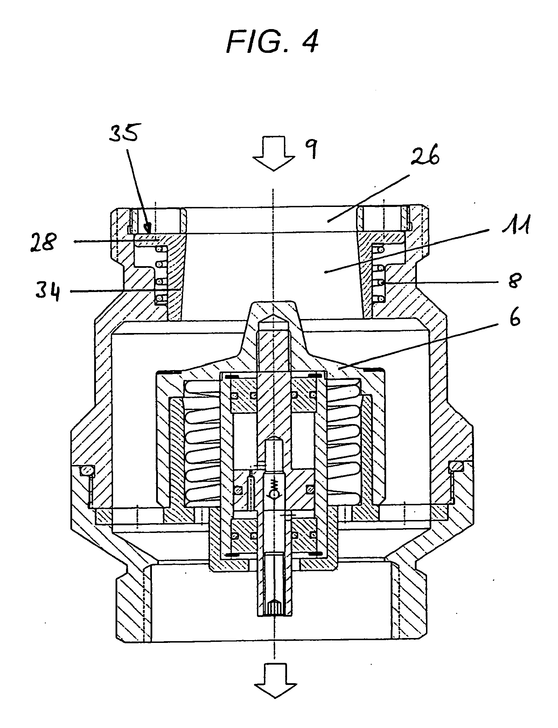

Die Funktionsweise der vorliegenden Überwachungsvorrichtung wird nachfolgend anhand der Figuren 1A und 2 bis 4 veranschaulicht. Dabei sind aus Gründen der Übersichtlichkeit in den Figuren 2 bis 4 nur diejenigen Bezugsziffern eingezeichnet, die für das Verständnis der Erfindung wesentlich sind.

Figur 1A zeigt das Befüllungsventil, d.h. Einlass 11 und Schließkolben 6 im geschlossenen Zustand. Der Schließkolben 6 wird mit der Ringdichtung 22 in Folge der Druckkraft der Druckfeder 7 gegen den von dem Vorsprung 5 gebildeten Anschlag 17 und das untere Ende des rohrförmigen Abschnitts 34 des Einsatzes gedrückt und verschließt den Einlass 11 dichtend. In diesem Zustand befindet sich die Überwachungsvorrichtung vor dem Betankungsvorgang. Wird die Vorrichtung nunmehr bei einem Befüllungsvorgang mit einem flüssigen Füllmedium beaufschlagt, welches mit einem Druck oberhalb einer vorbestimmten Druckgrenze von beispielsweise 1,3 bar Überdruck, d.h. zum Beispiel mit bis zu 10 bar Überdruck von dem Tankwagen geliefert wird, strömt dieses Füllmedium durch die Eintrittsöffnung 12 in den Einlass 11 und drückt den Schließkolben 6 in axialer Richtung entgegen der Federkraft der Druckfeder 7 nach unten, so dass sich der Schließkolben 6 von dem Anschlag 17, d.h. dem Vorsprung 5 unter Ausbildung eines ringförmigen Strömungsspaltes 33 abhebt. Dieser Zustand ist in Figur 2 dargestellt. Der Strömungsspalt beträgt zwischen 3 und 5 mm.

Das Füllmedium strömt nunmehr durch den Strömungsspalt 33 in den Gehäuseinnenraum 20 und durch die Durchflussbohrungen 21 in der Halteplatte 13 zum Auslass 18, von wo es in die entsprechende Füllleitung des Tanks respektive der Tankanlage fließt. Das Öffnen des Befüllungsventils bewirkt, dass der Druck im Einlass 11 absinkt. Lediglich eine ausreichend hohe Durchflussmenge von ca. 600 bis 800 Litern pro Minute vermag eine ausreichende Kraft aufzubringen, die den Schließkolben 6 ohne Hilfsmaßnahme weiter entgegen der Federkraft zur Halteplatte 13 hin drückt und damit den Öffnungsgrad des Befüllungsventils, d.h. den Strömungsspalt erhöht.

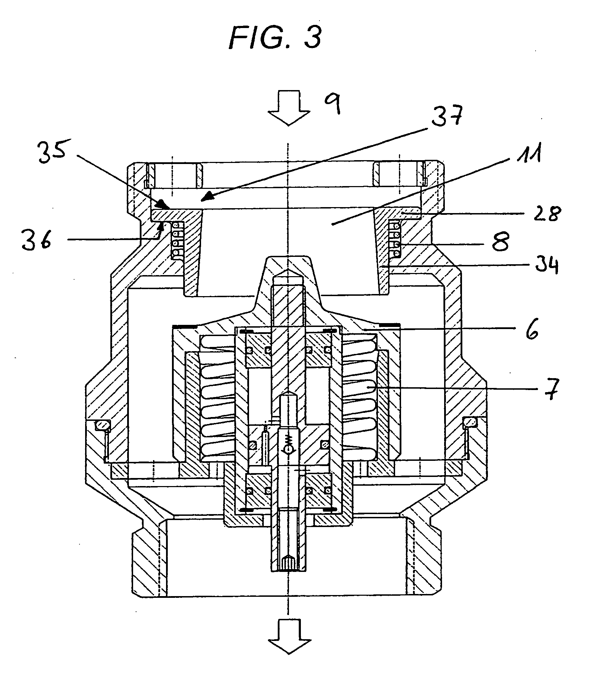

Erfindungsgemäß wird jedoch die Anströmfläche 35 der Hubscheibe 28 durch die Durchflussbohrungen 27 der Lochscheibe 26 vom Füllmedium angeströmt. Die Strömung übt auf die Hubscheibe 28 eine Kraft aus, die größer als die von der Druckfeder 8 aufgebrachte Gegenkraft ist, so dass die Hubscheibe 28 und entsprechend der rohrförmige Abschnitt 34 in Strömungsrichtung 9 bewegt wird. Sobald sich die Hubscheibe 28 geringfügig von der Lochscheibe 26 abhebt, wird auch hier ein Strömungsspalt 37, siehe Fig. 3, gebildet, durch den das einströmende Medium fließt, so dass die vom Füllmedium auf den Einsatz ausgeübte Kraft durch die Vergrößerung der Anströmfläche 35 zusätzlich erhöht wird. Der "Mitnahmeeffekt" des Einsatzes bewirkt wiederum, dass der zwischen dem Vorsprung 5 und dem Schließkolben 6 ausgebildete Strömungsspalt 33 verkürzt wird, da das axialseitige Ende des rohrförmigen Abschnitts 34 durch dessen Bewegung in Strömungsrichtung 9 über den Vorsprung 5 hervorgeschoben wird. Dies erhöht wiederum den Strömungswiderstand und führt dazu, dass der Schließkolben 6 weiter heruntergedrückt wird, um den Strömungsspalt 33 zu erhöhen. Dies hat wiederum zur Folge, dass der Einsatz 28, 34 weiter in Strömungsrichtung bewegt wird.

Das konstruktionsbedingte Zusammenspiel zwischen dem Schließkolben 6 und dem Einsatz 28, 34 erfolgt so lange, bis der gesamte Hubweg 30 des Einsatzes ausgenutzt ist, d.h. die Hubscheibe 28 an einem unteren Anschlag 36 angelangt ist. In diesem Zustand ist auch der Schließkolben 6 vollständig eingedrückt, d.h. der maximale Hubweg 16 zurückgelegt. Dieser Zustand ist in Figur 3 dargestellt.

Wird nunmehr der Befüllungsvorgang unterbrochen oder beendet, so dass kein Füllmedium mehr in Strömungsrichtung 9 in den Einlass 11 einströmt, wird der Anströmfläche 35 keine Kraft mehr entgegengebracht, die die Kraft der Druckfeder 8 überwinden kann. Infolge dessen drückt die Druckfeder 8 den Einsatz 28, 34 gegen die Lochscheibe 26, so dass der Schließkolben 6 den vollen Hub 16 für die Schließbewegung zur Verfügung hat. Ist dieser Hub beispielsweise 12mm, bei einer Schließgeschwindigkeit von 1 mm pro Sekunde, ergibt sich, dass die in dem Tankschlauch und der erfindungsgemäßen Überwachungsvorrichtung befindliche Flüssigkeit 12 Sekunden Zeit hat, um in den Tank respektive die Tankanlage abzufließen. Die notwendige Restentleerung der Vorrichtung und des Betankungsschlauchs kann auf die dargestellte Art wirkungsvoll und zuverlässig erreicht werden.

Durch den Einbau der Hubscheibe 28 wird unabhängig von der Füllleistung des Tankwagens ein konstanter Hub des Schließkolbens 6 erreicht, so dass eine sichere Restentleerung stets gewährleistet ist.

Der Hubweg 30 des Einsatzes 28, 34 kann beispielsweise 6mm sein, im Einzelfall jedoch auch anders gewählt werden, beispielsweise zwischen 3 und 10mm. Die Druckkraft, mit der die zweite Druckfeder 8 die Hubscheibe 28 gegen die Lochscheiben 26 drückt, kann beispielsweise 10 N betragen, wohingegen die Federkraft, die den Schließkolben 6 in Richtung des Einlasses 11 drückt bei beispielsweise 180 N liegen kann. Dies führt bei einem Innendurchmesser des Einlasses 11 von ca. 40mm dazu, dass das Befüllungsventil bei einem Überdruck von ca. 1,3 bar öffnet.

Die Restentleerung kann in diesen 12 Sekunden beispielsweise zwischen 1 und 1,5 Liter liegen.

Die Erfindungsgemäße Überwachungsvorrichtung gewährleistet durch den Einsatz 28, 34 einen konstanten Öffnungshub des Schließkolbens 6, d.h. einen Öffnungshub, der unabhängig von der Durchflussmenge ist, mit der ein Tank oder eine Tankanlage befüllt wird. Die Vorrichtung gewährleistet eine sichere Restentleerung bei geringer Störungsanfälligkeit und günstigen Produktionskosten.

### Bezugszeichenliste

- 1: Oberes Gehäuseteil
- 2: Unteres Gehäuseteil
- 3: Außengewinde
- 4: Innengewinde
- 5: Vorsprung
- 6: Schließkolben
- 7: Druckfeder
- 8: Druckfeder
- 9: Durchströmrichtungeintritt
- 10: Durchströmrichtungaustritt
- 11: Einlass
- 12: Einlassöffnung
- 13: Halteplatte
- 14: Gewinde
- 15: Dichtung oder Dichtungsmasse
- 16: Hub des Dichtkolbens
- 17: Erster Anschlag
- 18: Auslass
- 19: Austrittsöffnung
- 20: Gehäuseinnenraum
- 21: Durchflussbohrung
- 22: Flachdichtung
- 23: Zweiter Anschlag
- 24: Arbeitszylinder, hydraulischer Verzögerungszylinder
- 25: Arbeitskolben
- 26: Lochscheibe
- 27: Durchflussbohrung
- 28: Hubscheibe
- 29: Gewinde
- 30: Hubweg der Hubscheibe
- 31: Kolbenstange
- 32: Führungselement
- 33: Strömungsspalt
- 34: rohrförmiger Abschnitt
- 35: Anströmfläche
- 36: Anschlag
- 37: Strömungsspalt

## Patentansprüche

1. Vorrichtung zur Überwachung eines Betankungsvorgangs eines Tanks mit einem Medium, mit einem Einlass (11), einer Einlassöffnung (12), einem Auslass (18) und einem dazwischen angeordneten Befüllungsventil mit einem Schließkolben (6), der im geschlossenen Zustand des Befüllungsventils durch die Kraft einer ersten Druckfeder (7) gegen einen ersten Anschlag (17) gedrückt ist und den Einlass (11) dichtend verschließt, und der sich bei Beaufschlagung der Vorrichtung mit einem Medium eines Druck oberhalb einer vorbestimmten Druckgrenze unter Ausbildung eines Strömungsspaltes (33) von dem ersten Anschlag (17) abhebt, **dadurch gekennzeichnet, dass** in dem Einlass (11) ein Einsatz (28, 34) mit einem rohrförmigen Abschnitt (34) beweglich angeordnet ist, wobei der Einsatz (28, 34) im unbeaufschlagten Zustand durch die Kraft einer zweiten Druckfeder (8) in Richtung der Einlassöffnung (12) gegen einen zweiten Anschlag (23) gedrückt ist, und der Einsatz (28, 34) eine Anströmfläche (35) für das einzufüllende Medium aufweist, mittels welcher der Einsatz (28, 34) beim Einfüllen des Mediums zum Schließkolben (6) derart bewegbar ist, dass der Strömungsspalt (33) zumindest kurzzeitig verringerbar ist.

2. Vorrichtung nach Anspruch 1, **dadurch gekennzeichnet, dass** die zweite Druckfeder (8) eine geringere Federkonstante als die erste Druckfeder (7) aufweist.

3. Vorrichtung nach Anspruch 1 oder 2, **dadurch gekennzeichnet, dass** der Einsatz (28, 34) von einem ringförmigen, nach innen gerichteten Vorsprung (5) axial geführt ist.

4. Vorrichtung nach einem der vorherigen Ansprüche, **dadurch gekennzeichnet, dass** der Einsatz (28, 34) mit einem axialen Ende an dem Schließkolben (6) im geschlossenen Zustand des Befüllungsventils anliegt.

5. Vorrichtung nach Anspruch 4, **dadurch gekennzeichnet, dass** das axiale Ende den ersten Anschlag (17) bildet.

6. Vorrichtung nach einem der Ansprüche 3 bis 5, **dadurch gekennzeichnet, dass** der Vorsprung (5) den ersten Anschlag (17) bildet.

7. Vorrichtung nach einem der vorherigen Ansprüche, **dadurch gekennzeichnet, dass** die Anströmfläche (35) von einer zur Einlassöffnung (12) gerichteten Oberfläche einer Hubscheibe (28) gebildet ist.

8. Vorrichtung nach Anspruch 7, **dadurch gekennzeichnet, dass** die Hubscheibe (28) einen ringförmigen, radial nach außen gerichteten Kragen des Einsatzes (28, 34) bildet.

9. Vorrichtung nach Anspruch 7 oder 8, **dadurch gekennzeichnet, dass** die Hubscheibe (28) einstückig mit dem rohrförmigen Abschnitt (34) des Einsatzes (28, 34) ausgebildet ist.

10. Vorrichtung nach einem der vorherigen Ansprüche, **dadurch gekennzeichnet, dass** in axialer Richtung vor der Anströmfläche (35) eine Lochscheibe (26) angeordnet ist.

11. Vorrichtung nach Anspruch 10, **dadurch gekennzeichnet, dass** die Lochscheibe (26) auf die Anströmfläche (35) gerichtete Ausnehmungen (27) aufweist.

12. Vorrichtung nach Anspruch 10 oder 11, **dadurch gekennzeichnet, dass** die Lochscheibe (26) den zweiten Anschlag (23) bildet.

## Claims

1. Device for monitoring a tank filling process for filling a tank with a medium, having an inlet (11), having an inlet opening (12), having an outlet (18) and having arranged therebetween a filling valve with a closing piston (6) which, in the closed state of the filling valve, is pressed against a first stop (17) by the force of a first compression spring (7) and which sealingly closes off the inlet (11), and which, when the device is impinged on with a medium at a pressure above a predetermined pressure threshold, lifts up from the first stop (17) so as to form a flow gap (33), **characterized in that** an insert (28, 34) having a tubular portion (34) is movably arranged in the inlet (11), wherein the insert (28, 34), when not impinged on, is pushed in the direction of the inlet opening (12) against a second stop (23) by the force of a second compression spring (8), and the insert (28, 34) has a flow impingement surface (35) for the medium with which filling is to take place, by means of which flow impingement surface (35) the insert (28, 34) can, during the filling with the medium, be moved toward the closing piston (6) in such a way that the flow gap (33) can be at least briefly reduced in size.

2. Device according to Claim 1, **characterized in that** the second compression spring (8) has a lower spring constant than the first compression spring (7).

3. Device according to Claim 1 or 2, **characterized in that** the insert (28, 34) is guided axially by an annular, inwardly directed projection (5).

4. Device according to one of the preceding claims, **characterized in that** the insert (28, 34) bears with an axial end against the closing piston (6) when the filling valve is in the closed state.

5. Device according to Claim 4, **characterized in that** the axial end forms the first stop (17).

6. Device according to one of Claims 3 to 5, **characterized in that** the projection (5) forms the first stop (17).

7. Device according to one of the preceding claims, **characterized in that** the flow impingement surface (35) is formed by a surface, which is directed towards the inlet opening (12), of a lifting disc (28).

8. Device according to Claim 7, **characterized in that** the lifting disc (28) forms an annular, radially outwardly directed collar of the insert (28, 34).

9. Device according to Claim 7 or 8, **characterized in that** the lifting disc (28) is formed in one piece with the tubular portion (34) of the insert (28, 34).

10. Device according to one of the preceding claims, **characterized in that** a perforated disc (26) is arranged upstream of the flow impingement surface (35) in the axial direction.

11. Device according to Claim 10, **characterized in that** the perforated disc (26) has cutouts (27) which are directed towards the flow impingement surface (35).

12. Device according to Claim 10 or 11, **characterized in that** the perforated disc (26) forms the second stop (23).

## Revendications

1. Dispositif de surveillance d'un processus de ravitaillement d'un réservoir avec un fluide, avec une entrée (11), une ouverture d'entrée (12), une sortie (18) et une soupape de remplissage disposée entre celles-ci avec un piston de fermeture (6), qui à l'état fermé de la soupape de remplissage est poussé par la force d'un premier ressort de pression (7) contre une première butée (17) et ferme de façon étanche l'entrée (11), et qui lors de l'alimentation du dispositif avec un fluide à une pression supérieure à une limite de pression prédéterminée se soulève de la première butée (17) en formant une fente d'écoulement (33), **caractérisé en ce qu'**un insert (28, 34) avec une partie tubulaire (34) est disposé de façon mobile dans l'entrée (11), dans lequel l'insert (28, 34) à l'état non sollicité est poussé contre une deuxième butée (23) par la force d'un deuxième ressort de pression (8) en direction de l'ouverture d'entrée (12), et l'insert (28, 34) présente une surface d'arrivée (35) pour le fluide de remplissage, au moyen de laquelle l'insert (28, 34) est déplaçable par rapport au piston de fermeture (6), lors du remplissage de fluide, de telle manière que la fente d'écoulement (33) puisse être réduite au moins temporairement.

2. Dispositif selon la revendication 1, **caractérisé en ce que** le deuxième ressort de pression (8) présente une plus faible constante élastique que le premier ressort de pression (7).

3. Dispositif selon la revendication 1 ou 2, **caractérisé en ce que** l'insert (28, 34) est guidé axialement par une saillie annulaire (5) orientée vers l'intérieur.

4. Dispositif selon l'une quelconque des revendications précédentes, **caractérisé en ce que** l'insert (28, 34) s'applique par une extrémité axiale sur le piston de fermeture (6) à l'état fermé de la soupape de remplissage.

5. Dispositif selon la revendication 4, **caractérisé en ce que** l'extrémité axiale forme la première butée (17).

6. Dispositif selon l'une quelconque des revendications 3 à 5, **caractérisé en ce que** la saillie (5) forme la première butée (17).

7. Dispositif selon l'une quelconque des revendications précédentes, **caractérisé en ce que** la surface d'arrivée (35) est formée par une surface d'un disque de levage (28) orientée vers l'ouverture d'entrée (12).

8. Dispositif selon la revendication 7, **caractérisé en ce que** le disque de levage (28) forme un collet annulaire de l'insert (28, 34), orienté radialement vers l'extérieur.

9. Dispositif selon la revendication 7 ou 8, **caractérisé en ce que** le disque de levage (28) est réalisé d'une seule pièce avec la partie tubulaire (34) de l'insert (28, 34).

10. Dispositif selon l'une quelconque des revendications précédentes, **caractérisé en ce qu'**un disque perforé (26) est disposé devant la surface d'arrivée (35) en direction axiale.

11. Dispositif selon la revendication 10, **caractérisé en ce que** le disque perforé (26) présente des évidements (27) orientés vers la surface d'arrivée (35).

12. Dispositif selon la revendication 10 ou 11, **caractérisé en ce que** le disque perforé (26) forme la deuxième butée (23).
